Europäisches Patentamt

European Patent Office

Office européen des brevets

(11) Publication number: **0 305 927**
**A2**

# EUROPEAN PATENT APPLICATION

(21) Application number: **88113971.1**

(22) Date of filing: **26.08.88**

(51) Int. Cl.⁴: **G11B 7/00 , G11B 33/02 ,**
**//G11B33/10**

(30) Priority: **31.08.87 JP 133614/87 U**

(43) Date of publication of application:
**08.03.89 Bulletin 89/10**

(84) Designated Contracting States:
**AT BE CH DE ES FR GB GR IT LI LU NL SE**

(71) Applicant: **OMRON TATEISI ELECTRONICS CO.:**
**10, Tsuchido-cho Hanazono Ukyo-ku**
**Kyoto 616(JP)**

(72) Inventor: **Kentatsu, Kunihiro Omron Tateisi**
**Electronics Co.**
**Patent Center 20 Igadera Shimo-Kaiinji**
**Nagaokakyo-City Kyoto 617(JP)**

(74) Representative: **WILHELMS, KILIAN & PARTNER Patentanwälte**
**Eduard-Schmid-Strasse 2**
**D-8000 München 90(DE)**

(54) **Optical card processing apparatus.**

(57) To protect the inspector's or repair man's eyes from a laser beam erroneously emitted from an optical head incorporated in an optical card processing apparatus, the apparatus comprises a casing (20) provided with an opened/closed lid (24); an optical head (23) provided with a laser light source (14); a circuit (11) for driving the laser light source; and a switch (13) for detecting whether the lid is opened and for disabling the driving circuit whenever the lid is detected as being opened.

## Fig.3

EP 0 305 927 A2

## OPTICAL CARD PROCESSING APPARATUS

### BACKGROUND OF THE INVENTION

The present invention relates to an optical card processing apparatus for writing (recording) and/or reading (reproducing or playing-back) information to and/or from an optical card.

An optical card records information or data in accordance with the presence or absence and the positions of extremely small pits formed on the surface thereof, and these data can be written and/or read optically or optomagnetically. Since information can be recorded at extremely high density, the optical card is now highlighted as novel recording cards in place of conventional magnetic cards. Further, the card processing apparatus for performing at least either one of writing or reading information to or from an optical card is called an optical card reader/writer.

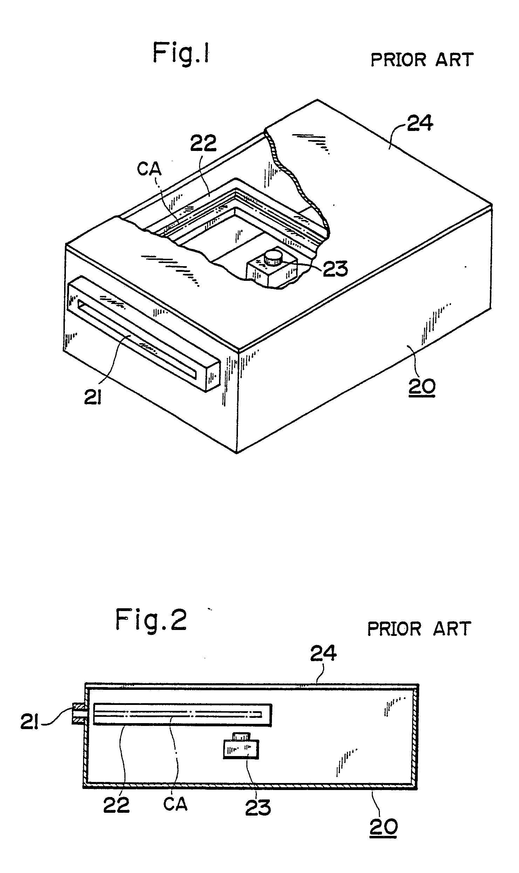

Figs. 1 and 2 show an example of prior-art optical card reader/writer. In these drawings, an optical card holder 22 and an optical head 23 are arranged within an optical card reader/writer casing 20. An optical card CA inserted through an optical card insertion slot 21 formed at one side surface of the casing 20 is held in position by this optical card holder 22. This holder 22 moves to and from within the casing 20 in the direction that an optical card is inserted. An optical head 23 is provided under the holder 20 and moved in the direction perpendicular to that along which the holder 22 moves. The optical head 23 comprises a laser source, an optical system for focusing a laser beam from the laser source onto an optical card CA, and another optical system for receiving a laser beam reflected from the optical card CA. While the card CA held by the holder 22 is moving in the card insertion direction, information for each track can be read or written from or to the optical card. Further, a lid 24 (e.g. pivotable or removable cover, etc.) is provided on the casing 20 so as to be opened/closed for inspection or maintenance.

Although the lid 24 is usually closed, when the lid 24 is opened for inspection or maintenance under the condition that no optical card is inserted into the casing 20, an objective lens included in an optical system for irradiating an inserted optical card with a laser beam is exposed. Therefore, in case a laser source driving circuit is operated erroneously and therefore a laser beam is emitted when an inspector or a repair man is looking into the inside of the casing, there exists a problem in that the retinae of the inspector are injured in the case of the prior-art optical card reader/writer.

### SUMMARY OF THE INVENTION

With these problems in mind, therefore, it is the primary object of the present invention to provide an optical card processing apparatus by which the laser beam driving circuit is securely disabled when an inspector or a repair man is looking into the inside of the casing.

To achieve the above-mentioned object, the optical card processing apparatus of the present invention comprises:
(a) an optical card processing apparatus casing provided with an opened/closed lid; (b) an optical head provided with a laser light source, housed in said casing, for writing and/or reading information to and/or from an optical card; (c) a circuit for driving and controlling said laser light source; (d) means for detecting whether the lid is opened and outputting a lid open detection signal whenever the lid is opened; and (e) means, responsive to the lid open detection signal, for controlling said driving and controlling circuit so that the laser light source is not generated whenever the lid is opened.

According to the present invention, whenever the casing lid is opened by an inspector or a repair man for inspection or maintenance, since the means for detecting whether the lid is opened outputs a lid open detection signal and the laser light source driving circuit is disabled in response to the lid open detection signal, it is possible to prevent a laser beam from being generated due to erroneous operation of the driving circuit. Therefore, it is possible to securely protect the inspector's or repair man's eyes from the laser beam during inspection or maintenance of the optical card processing apparatus.

### BRIEF DESCRIPTION OF THE DRAWINGS

Fig. 1 is a perspective, partially broken view showing a prior-art optical card processing apparatus;

Fig. 2 is a side view partly in section showing the prior-art apparatus shown in Fig. 1;

Fig. 3 is a side view partly in section showing an embodiment of the optical card processing apparatus of the present invention; and

Fig. 4 is a schematic block diagram showing an optical head and the relationship between a switch and a driver circuit incorporated in the apparatus of the present invention.

## DETAILED DESCRIPTION OF PREFERRED EMBODIMENT

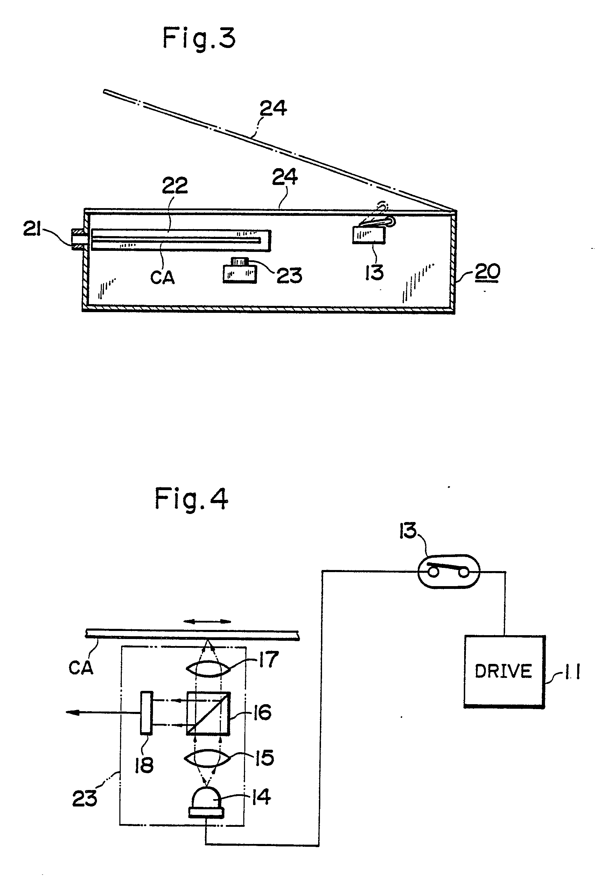

Figs. 3 and 4 show an embodiment of the optical card processing apparatus of the present invention, in which the same references have been retained for similar parts which have the same functions as with the prior-art apparatus previously described, without repeating any detailed description of them.

The optical head 23 will be described hereinbelow by taking the case of that suitable for an optical card reader. A laser beam emitted from a laser diode 14 is collimated through a collimator lens 15, passed through a beam splitter 16, and then focused onto the surface of an optical card CA through an objeotive lens 17. On the other hand, the laser beam reflected from the optical card CA is passed through the objective lens 17, deflected by the beam splitter 16, and then received by a photodiode 18. Optical signals received by the photodiode 18 represent data read from the optical card CA. The laser diode 14 is controllably driven by a driver circuit 11. Although not shown, the optical head 23 is provided with a laser beam focusing controlling mechanism and tracking controlling mechanism.

On the other hand, a casing 20 of the optical card reader is provided with a lid (e.g. pivotable or removable cover) 24 for inspection or repair, and further a switch (e.g. limit switch) 13 turned on and off when the lid is closed and opened is connected between the laser diode driver circuit 11 and the laser diode 14 of the optical head 23, all being housed within the casing 20.

Therefore, when the lid 24 is closed, since the switch 13 is turned on, a drive or control signal is applied from the driver circuit 11 to the laser diode 14 of the optical head 23 via the switch 13, so that the optical head 23 generates a laser light toward the optical card CA for performing optical recording and/or reproducing operation. However, when the lid 24 is opened, even if the laser diode driver circuit 11 is activated due to erroneous operation, since the switch 13 is turned off, no laser light is generated from the optical head 23. Therefore, it is possible to avert a danger such that eyes of an inspector or repair man who is looking into the casing 20 is injured by the laser beam.

Further, in the above embodiment, the position at which the switch 13 is mounted is not limited to a specific location and also the construction of the optical system of the optical head shown in Fig. 4 is described only by way of example. That is to say, without being limited to the limit switch, the above means for detecting that the lid is open is a device for optically detecting the open lid, a mechanism for detecting the open lid with use of other contact or contactless switch, etc. Further, it is also possible to turn off the power supply for the laser diode driver circuit 11. In summary, there exists various means for allowing the laser light source to be inoperative whenever the lid of the casing is opened.

## Claims

1. An optical card processing apparatus, comprising:

    (a) an optical card processing apparatus casing (20) provided with an opened/closed lid (24);

    (b) an optical head (23) provided with a laser light source (14), housed in said casing, for writing and/or reading information to and/or from an optical card (CA);

    (c) a circuit (11) for driving and controlling said laser light source;

    (d) means (13) for detecting whether the lid is opened and outputting a lid open detection signal whenever the lid is opened; and

    (e) means (13), responsive to the lid open detection signal, for controlling said driving and controlling circuit so that the laser light source is not generated whenever the lid is opened.

2. The optical card processing apparatus of claim 1, wherein said optical head is disposed at such a position that a laser light is emitted from said optical head toward the lid.

3. The optical card processing apparatus of claim 1, wherein said controlling means is a switch disconnecting the laser light source from said driving and controlling circuit.

4. The optical card processing apparatus of claim 1, wherein said controlling means is means for allowing said driving and controlling means to be inoperative.

# Fig.1

CA

22

24

23

21

20

# Fig.2

24

21

22     CA     23

20

# Fig.3

# Fig.4